# EUROPÄISCHE PATENTSCHRIFT

(11) **EP 2 598 276 B1**
(45) Veröffentlichungstag und Bekanntmachung des Hinweises auf die Patenterteilung: **18.01.2017**
(21) Anmeldenummer: 11727923.2
(22) Anmeldetag: 18.06.2011
(51) Int. Cl.: B23K 11/00, B23K 11/11, B23K 11/26, B23K 11/31

(54) **VERFAHREN ZUM AUFSCHWEISSEN EINER KUGEL AUF EIN BLECH DURCH EINEN SCHWEISSSTROM ZWISCHEN ELEKTRODEN**
METHOD OF WELDING A SPHERE ONTO A METAL SHEET BY A WELDING CURRENT BETWEEN ELECTRODES
PROCÉDÉ DE SOUDAGE D'UNE SPHERE SUR UNE TÔLE PAR UN COURANT DE SOUDAGE ENTRE DES ÉLECTRODES

(30) Priorität: 29.07.2010 DE 102010038616
(43) Veröffentlichungstag der Anmeldung: 05.06.2013
(73) Patentinhaber: Bayerische Motoren Werke Aktiengesellschaft, 80809 München (DE)
(72) Erfinder: MANTEI, Ingo, 80804 München (DE); VASOLD, Hannes, 85301 Schweitenkirchen (DE)
(86) Internationale Anmeldenummer: PCT/EP2011/003032
(87) Internationale Veröffentlichungsnummer: WO 2012/013268

(56) Entgegenhaltungen:
- WO-A1-2008/108165
- CH-A- 388 486
- DE-A1- 3 232 926
- JP-A- 8 071 767
- JP-A- 2005 046 896
- US-A- 3 694 614

## Beschreibung

Die vorliegende Erfindung betrifft ein Verfahren gemäß dem Oberbegriff des Patentanspruches 1.

Ein derartiges Verfahren ist aus der US 3,694,614 A bekannt. Zum technischen Hintergrund der vorliegenden Erfindung zählen die CH 388 486 A, JP 8 071767 A, WO 2008/108165 A1, JP 2005 046896 A sowie die DE 32 32 926 A.

Aus älteren, teilweise nicht vorveröffentlichten Patentanmeldungen ist bereits bekannt, Kugeln oder kugelförmige bzw. kugelähnliche Geometrien als Verbindungs- oder Befestigungselemente im Karosseriebau einzusetzen. Eine wesentliche Voraussetzung für eine Industrialisierung dieser Fertigungsmethode besteht darin, dass es gelingt, die entsprechenden kugelförmigen oder kugelähnlichen Körper automatisiert möglichst präzise und prozessicher mit einem Blech zu verbinden.

Aufgabe der Erfindung ist es, ein Verfahren, insbesondere ein automatisiertes Verfahren zum Verbinden einer Kugel mit einem Blech anzugeben, das eine hohe Positionierungsgenauigkeit und eine hohe Verbindungsfestigkeit ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Der Grundgedanke der Erfindung besteht darin, die Kugel durch Widerstandspressschweißen mit dem Blech zu verbinden. Widerstandspressschweißen ermöglicht kurze Taktzeiten und eine hohe Positionierungsgenauigkeit. Mit diesem Verfahren ist eine Positionierungsgenauigkeit der Kugel in Bezug erreichbar. Ein weiterer Vorteil ist darin zu sehen, dass im Unterschied zu anderen Schweißverfahren kaum Schweißspritzer entstehen, was eine saubere, qualitativ hochwertige Schweißverbindung ermöglicht.

Das erfindungsgemäße Verfahren sieht vor, mittels einer ersten Elektrode eine auf ein Blech aufzuschweißende Kugel zu erfassen. In einem weiteren Schritt werden das Blech und die Kugel zusammengedrückt, wobei die Kugel mittels der ersten Elektrode gegen das Blech und das Blech von einer Blechrückseite her mittels einer zweiten Elektrode gegen die Kugel gedrückt wird, wodurch ein gewisser Anpressdruck aufgebaut wird. Anschließend erfolgt in einem einige Sekundenbruchteile dauernden Vorgang das Verschweißen der Kugel mit dem Blech, indem zwischen den beiden Elektroden ein durch das Blech und die Kugel fließender Schweißstrom erzeugt wird.

Gemäß der Erfindung wird der Schweißstrom für weniger als eine Sekunde, insbesondere für weniger als 60 ms, insbesondere für weniger als 10 ms erzeugt.

Gemäß der Erfindung wird der Schweißstrom durch Entladen eines Kondensators erzeugt, was den Vorteil hat, dass mit vergleichsweise geringem Aufwand kurzzeitig ein sehr hoher Schweißstrom erzeugt werden kann.

Das Erfassen der Kugel mittels der ersten Elektrode wird gemäß der Erfindung mittels einer der ersten Elektrode zugeordneten Ansaugeinrichtung erreicht.

Hierzu ist gemäß der Erfindung an einer Stirnseite der ersten Elektrode eine Ausnehmung vorgesehen, in welche die Kugel mittels einer Saugeinrichtung so angesaugt wird, dass zumindest eine zu verschweißende Seite der Kugel noch aus der Ausnehmung heraussteht. Die Saugeinrichtung kann an der ersten Elektrode angeordnet oder zumindest teilweise oder ganz in die erste Elektrode integriert sein. Die Ausnehmung kann beispielsweise kalottenförmig, konisch oder in sonstiger Weise topfförmig gestaltet sein. Wichtig ist, dass die Ausnehmung so gestaltet ist, dass beim Ansaugen der Kugel die Kugel in definierter Weise, d. h. exakt in Bezug auf die erste Elektrode positioniert ist. Gemäß der Erfindung berührt die Kugel eine Innenseite der Ausnehmung entlang eines Kleinkreises der Kugel.

Um das Erfassen der Kugel mittels der ersten Elektrode zu automatisieren, kann eine Zuführeinrichtung verwendet werden. Es kann vorgesehen sein, dass die Kugel zunächst an der Zuführeinrichtung gehalten wird und mittels der Zuführeinrichtung in den Bereich der Stirnseite der ersten Elektrode transportiert wird. Sobald sich die Kugel im "Ansaugbereich" der ersten Elektrode befindet, kann sie von der ersten Elektrode angesaugt und somit an die erste Elektrode übergeben werden.

Die Zuführeinrichtung kann als schwenkbare Zuführeinrichtung ausgebildet sein. Durch Verschwenken der Zuführeinrichtung um eine Schwenkachse kann die Kugel in den Ansaugbereich bzw. in den Bereich der Stirnseite der ersten Elektrode gebracht werden. Die Zuführeinrichtung kann ebenfalls mit einer Ansaugeinrichtung zum Ansaugen und Halten der zu transportierenden Kugel versehen sein. Hierzu kann an der Zuführeinrichtung eine Ausnehmung vorgesehen sein, in welche die Kugel so angesaugt wird, dass sie zumindest soweit aus der Ausnehmung heraussteht, dass sie von der Ansaugeinrichtung der ersten Elektrode angesaugt werden kann.

Das oben beschriebene Verfahren ist insbesondere zum Aufschweißen von Metallkugeln auf Karosseriebleche von Fahrzeugen geeignet. Bei den Kugeln kann es sich z. B. um Stahlkugeln oder Aluminiumkugeln oder um Kugeln aus einem anderen Metall bzw. einer Metalllegierung handeln. Das oben beschriebene Verfahren eignet sich gut, um automatisiert mittels eines Roboters durchgeführt zu werden.

Im Folgenden wird die Erfindung im Zusammenhang mit der Zeichnung näher erläutert.

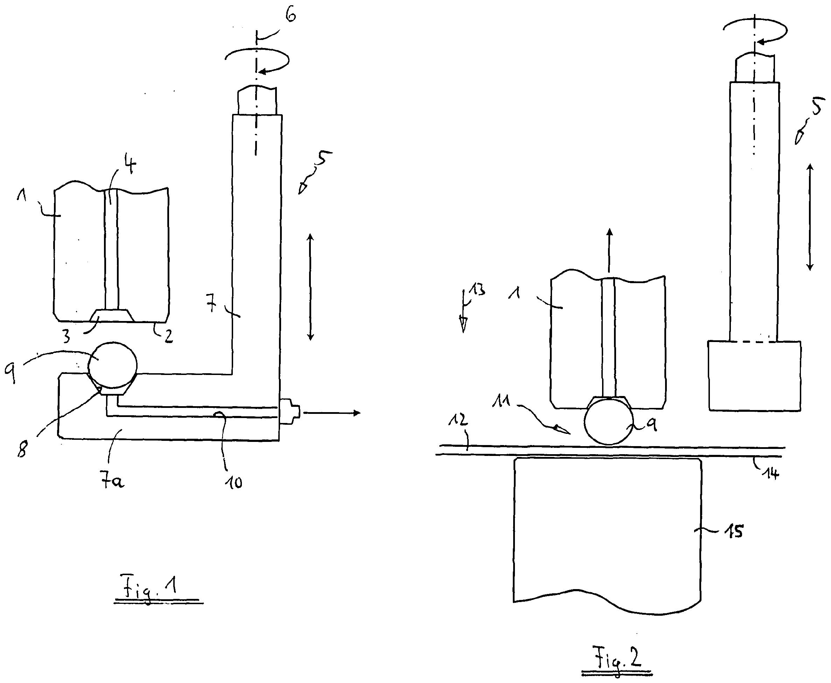

Fig. 1, 2 zeigen das erfindungsgemäße Verfahren in schematischer Darstellung.

Fig. 1 zeigt eine erste Schweißelektrode 1, die an einer Stirnseite 2 eine konische Ausnehmung 3 aufweist. In der Schweißelektrode 1 ist ein in Axialrichtung der Schweißelektrode verlaufender Ansaug- bzw. Unterdruckkanal 4 vorgesehen, der in die Ausnehmung 3 mündet. Der Ansaug- bzw. Unterdruckkanal 4 ist an eine hier nicht näher dargestellte Saugeinrichtung (z. B. Vakuumpumpe) angeschlossen.

Ferner dargestellt ist eine schwenkbare Transport- bzw. Zuführeinrichtung 5. Sie weist einen um eine Schwenkachse 6 verschwenkbaren L-förmigen Schwenkarm 7 auf. Der in Bezug auf die Schwenkachse 6 abstehende Schenkel 7a des Schwenkarms 7 weist eine konische Ausnehmung 8 auf, in die von oben her eine Kugel 9, die z. B. aus Stahl oder einem anderen Metall bestehen kann, eingelegt ist. In dem Arm 7a ist ein Unterdruckkanal 10 integriert, welcher in die Ausnehmung 8 mündet. In dem Unterdruckkanal 10 kann mittels einer hier nicht näher dargestellten Saugeinrichtung ein Unterdruck erzeugt werden, wodurch die Kugel 9 zusätzlich an dem Schenkel 7a des Schwenkarms 7 bzw. in der Ausnehmung 8 gehalten werden kann.

In einem ersten Schritt ist die Zuführeinrichtung 5 von der ersten Elektrode weg verschwenkt. In dieser "Bestückungsposition" kann z. B. mittels eines Schlauchförderers oder einer anderen Fördereinrichtung eine Kugel 9 in die Ausnehmung 8 des Arms 7a platziert werden. Um ein "Herunterfallen" der Kugel zu verhindern, wird die Kugel dabei mittels Unterdruck angesaugt und somit fixiert. Sobald die Kugel 9 auf dem Schenkel 7a bzw. in der Ausnehmung 8 liegt, wird die Zuführeinrichtung 5 in die in Fig. 1 gezeigte Stellung um die Schwenkachse 6 verschwenkt. In dieser "Übergabestellung" befindet sich die Kugel 9 im Ansaugbereich der ersten Elektrode 1. Durch Abschalten des Saugdrucks der Zuführeinrichtung und Einschalten eines hinreichend hohen Saugdrucks an der ersten Elektrode 1 kann die Kugel 9 in die Ausnehmung 3 der ersten Elektrode 1 gesaugt und somit an die erste Elektrode 1 übergeben werden.

Anschließend kann die Kugel 9 mittels der ersten Elektrode 1 in Schweißposition gebracht werden. Die Kugel 9 kann hierzu an eine Schweißstelle 11 auf einem Blech 12 herangefahren werden, was in Fig. 2 dargestellt ist. Dabei wird der Saugdruck an der ersten Elektrode 1 aufrecht erhalten. Die Zuführeinrichtung 5 ist während dieser Phase in "Bestückungsstellung" verschwenkt (vgl. Fig. 2). Sie kann also mit einer weiteren Kugel bestückt werden (nicht dargestellt).

Anschließend wird die Kugel 9 exakt mittels der ersten Elektrode 1 ausgerichtet und positioniert und mittels der der ersten Elektrode 1 in einer durch den Pfeil 13 angedeuteten Richtung gegen das Blech 12 gedrückt. Von einer Rückseite 14 des Blechs 12 her drückt eine zweite Schweißelektrode 15. Wenn die Kugel 9 und das Blech 12 relativ zueinander exakt positioniert und zusammengedrückt sind, wird zwischen den beiden Schweißelektroden 1, 15 ein Schweißstrom erzeugt, welcher durch die Kugel, den Berührbereich der Kugel mit dem Blech und das Blech fließt und ein Aufschmelzen bzw. Verschweißen der Kugel 9 mit dem Blech 12 bewirkt.

## Patentansprüche

1. Verfahren zum Aufschweißen einer Kugel (9) auf ein Blech (12) mit folgenden Schritten:
• Bereitstellen einer Kugel (9),
• Bereitstellen einer ersten Elektrode (1),
• Bereitstellen einer zweiten Elektrode (15),
• Bereitstellen eines Blechs (12),
• Erfassen der Kugel (9) mittels der ersten Elektrode (1) und Ausrichten der Kugel in Bezug auf das Blech (12),
• Zusammendrücken des Blechs (12) und der Kugel (9), wobei die Kugel (9) mittels der ersten Elektrode (1) gegen das Blech (12) und das Blech (12) mittels der zweiten Elektrode (15) gegen die Kugel (9) gedrückt wird,
• Verschweißen von Kugel (9) und Blech (12), durch Erzeugen eines Schweißstroms zwischen den beiden Elektroden (1, 15)
**dadurch gekennzeichnet, dass**
das Erfassen der Kugel (9) durch Ansaugen der Kugel (9) mittels einer der ersten Elektrode (1) zugeordneten Ansaugeinrichtung (4) erfolgt, wobei
• an einer Stirnseite (2) der ersten Elektrode (1) eine Ausnehmung (3) vorgesehen ist, in welche die Kugel (9) so eingesaugt wird, dass eine zu verschweißende Seite der Kugel (9) aus der Ausnehmung (3) heraussteht und
• die Kugel (9) entlang eines Kleinkreises an einem Berührkreis einer Innenseite der Ausnehmung (3) anliegt und
der Schweißstrom durch Entladen eines Kondensators erzeugt wird, wobei der Schweißstrom für weniger als 1 Sekunde, insbesondere für weniger als 60ms, insbesondere für weniger als 10ms erzeugt wird.

2. Verfahren nach Anspruch 1, **dadurch gekennzeichnet, dass** die Kugel (9) zunächst an der Zuführeinrichtung (5) gehalten wird und mittels der Zuführeinrichtung in den Ansaugbereich der Stirnseite (2) der ersten Elektrode (1) gebracht und durch Ansaugen mittels der der ersten Elektrode (1) zugeordneten Ansaugeinrichtung (4) an die erste Elektrode (1) übergeben wird.

3. Verfahren nach Anspruch 2, **dadurch gekennzeichnet, dass** die Kugel (9) durch Verschwenken der Zuführeinrichtung (5) um eine Schwenkachse (6) im Bereich der Stirnseite (2) der ersten Elektrode (1) gebracht wird.

4. Verfahren nach einem der Ansprüche 2 oder 3, **dadurch gekennzeichnet, dass** die Kugel (9) durch Ansaugen mittels einer der Zuführeinrichtung (5) zugeordneten Ansaugeinrichtung (10) an der Zuführeinrichtung (5) gehalten wird.

5. Verfahren nach einem der Ansprüche 2 bis 4, **dadurch gekennzeichnet, dass** an der Zuführeinrichtung (5) eine Ausnehmung (8) vorgesehen ist, in welche die Kugel (9) so eingesaugt wird, dass sie zumindest zum Teil noch aus der Ausnehmung (8) heraussteht.

6. Verfahren nach einem der Ansprüche 1 bis 5, **dadurch gekennzeichnet, dass** die Kugel (9) auf ein Karosserieblech (12) eines herzustellenden Fahrzeugs aufgeschweißt wird.

7. Verfahren nach einem der Ansprüche 1 bis 6, **dadurch gekennzeichnet, dass** das Zuführen der Kugel (9) zur ersten Elektrode (1) und das Verschweißen der Kugel (9) mit dem Blech (12) automatisiert mittels eines Roboter durchgeführt wird.

## Claims

1. A method for welding a sphere (9) onto a metal sheet (12) having the following steps:
• providing a sphere (9),
• providing a first electrode (1),
• providing a second electrode (15),
• providing a metal sheet (12),
• picking up the sphere (9) by the first electrode (1) and orienting the sphere with respect to the metal sheet (12),
• pressing the metal sheet (12) and the sphere (9) together, wherein the sphere (9) is pressed against the metal sheet (12) by the first electrode (1) and the metal sheet (12) is pressed against the sphere (9) by the second electrode (15),
• welding the sphere (9) and the metal sheet (12) by generating a welding current between the two electrodes (1, 15)
**characterised in that**
the sphere (9) is picked up by a suctioning of the sphere (9) by means of a suction device (4) which is associated with the first electrode (1), wherein
• provided in an end face (2) of the first electrode (1) is a recess (3), into which the sphere (9) is suctioned so that a side of the sphere (9) which is to be welded protrudes out of the recess (3), and
• the sphere (9) rests on a contact circle of an inner side of the recess (3) along a small circle, and
the welding current is generated by discharging a capacitor, the welding current being generated for less than 1 second, especially for less than 60 ms, especially for less than 10 ms.

2. A method according to claim 1, **characterised in that** the sphere (9) is initially held on the feed device (5) and is brought by the feed device into the suction region of the end face (2) of the first electrode (1) and is transferred to the first electrode (1) by suction by means of the suction device (4) associated with the first electrode (1).

3. A method according to claim 2, **characterised in that** the sphere (9) is brought into the region of the end face (2) of the first electrode (1) by swivelling the feed device (5) about a swivel axis (6).

4. A method according to either claim 2 or claim 3, **characterised in that** the sphere (9) is held on the feed device (5) by suction by means of a suction device (10) associated with the feed device (5).

5. A method according to any one of claims 2 to 4, **characterised in that** provided in the feed device (5) is a recess (8), into which the sphere (9) is suctioned so that it at least partly protrudes out of the recess (8).

6. A method according to any one of claims 1 to 5, **characterised in that** the sphere (9) is welded onto a body sheet (12) of a vehicle which is to be produced.

7. A method according to any one of claims 1 to 6, **characterised in that** the sphere (9) is fed to the first electrode (1) and the sphere (9) is welded with the metal sheet (12) in an automated manner by a robot.

## Revendications

1. Procédé permettant de souder une sphère (9) sur une tôle (12) comprenant les étapes suivantes consistant à :
- se procurer une sphère (9),
- se procurer une première électrode (1),
- se procurer une seconde électrode (15),
- se procurer une tôle (12),
- saisir la sphère (9) au moyen de la première électrode (1) et orienter cette sphère par rapport à la tôle (12),
- comprimer la tôle (12) et la sphère (9) l'une contre l'autre, la sphère (9) étant serrée contre la tôle (12) au moyen de la première électrode (1) et la tôle (12) étant serrée contre la sphère (9) au moyen de la seconde électrode (15),
- souder la sphère (9) et la plaque (12) suite à la production d'un courant de soudage entre les deux électrodes (1, 15),
**caractérisé en ce que**
la saisie de la sphère (9) est effectuée par aspiration de cette sphère (9) au moyen d'un dispositif d'aspiration (4) associé à la première électrode (1),
- sur une face frontale (2) de la première électrode (1), étant prévu un évidement (3) dans lequel la sphère (9) est aspirée de sorte que le côté de la sphère (9) devant être soudé dépasse de l'évidement (3), et
- la sphère (9) s'appliquant le long d'un petit cercle sur un cercle de contact de la face interne de l'évidement (3), et
le courant de soudage est obtenu par décharge d'un condensateur, ce courant de soudage étant produit pendant moins d'une seconde, en particulier pendant moins de 60 ms, et plus particulièrement pendant moins de 10 ms.

2. Procédé conforme à la revendication 1,
**caractérisé en ce que**
la sphère (9) est, tout d'abord, maintenue sur un dispositif d'alimentation (5), transférée au moyen de ce dispositif d'alimentation dans la zone d'aspiration de la face frontale (2) de la première électrode (1) et, par aspiration, est transférée sur la première électrode (1) au moyen du dispositif d'aspiration (4) associé à cette première électrode (1).

3. Procédé conforme à la revendication 2,
**caractérisé en ce que** la sphère (9) est transférée, dans la zone de la frontale (2) de la première électrode (1) par pivotement du dispositif d'alimentation (5) autour d'un axe de pivotement (6).

4. Procédé conforme à l'une des revendications 2 et 3,
**caractérisé en ce que**
la sphère (9) est maintenue sur le dispositif d'alimentation (5) par aspiration au moyen d'un dispositif d'aspiration (10) associé au dispositif d'alimentation (5).

5. Procédé conforme à l'une quelconque des revendications 2 à 4, **caractérisé en ce que**
sur le dispositif d'alimentation (5) est prévu un évidement (8), dans lequel la sphère (9) est aspirée de sorte qu'elle dépasse encore au moins en partie de l'évidement (8).

6. Procédé conforme à l'une des revendications 1 à 5 **caractérisé en ce que**
la sphère (9) est soudée sur une tôle de carrosserie (12) d'un véhicule devant être fabriqué.

7. Procédé conforme à l'une des revendications 1 à 6,
**caractérisé en ce que**
l'arrivée de la sphère (9) vers la première électrode (1) et le soudage de la sphère (9) avec la plaque (12) sont effectués de manière automatisée à l'aide un robot.
